# EUROPEAN PATENT APPLICATION

(11) **EP 1 246 047 A2**
(43) Date of publication of application: **02.10.2002**
(21) Application number: 01130452.4
(22) Date of filing: 20.12.2001
(51) Int. Cl.: G06F 3/023, H04M 1/2745

(54) **Portable telephone**

(30) Priority: 26.03.2001 JP 2001087276
(71) Applicant: Hitachi Kokusai Electric Inc., Tokyo 164-8511 (JP)
(72) Inventor: Makino, Nobuhisa, Hitachi Kokusai Electric Inc., Tokyo 164-8511 (JP)
(74) Representative: Liesegang, Eva

(57) **Abstract**

A conventional portable telephone has problems that, upon copy/paste in character input, key operations for cursor movement are many and the convenience of use is bad and a portable telephone in which key operations attendant upon cursor movement when performing copy/paste and a copy range selection can be decreased and the convenience of use can be improved is provided. It is a portable telephone wherein, in a state that a picture for selecting a copy start position is displayed, when all data copy key (41) is depressed, a control section (2) selects all character data displayed as a copy range, besides, when a character string copy key (43) is depressed, the control section (2) selects a series of half-size alphabet or numeral character data starting from a character string registered in advance as a copy range.

## Description

### BACKGROUND OF THE INVENTION

### 1. Field of the Invention

The present invention relates to portable telephones, particularly to portable telephones capable of simplifying key operations attendant upon copy/paste in character input and improving the convenience of use.

### 2. Description of the Related Art

In recent years, portable telephones have increased in which mail transmission or Internet perusal is possible, and the necessity of character input in portable telephones is in the rise.

Using a conventional portable telephone, when a character string is selected out of characters already displayed and copying is performed, a user selects a copy range, designates a paste position, and then performs pasting.

More specifically, the user performs operations in which a copy function is activated, a copy start position and a copy end position are designated, and after this, a paste function is activated, and a position to paste is designated.

Since such a portable telephone has no pointing device such as a mouse of a personal computer, copy range designations and paste position designations are all performed by cursor movement.

An operation of copy/paste in a conventional portable telephone will be described specifically.

First, when a copy function is activated by a user depressing a copy key or selecting the copy function from a menu picture, the portable telephone displays a copy start position selection picture and displays a guidance such as "start position?" or the like.

When the user moves a cursor to designate a copy start position, the portable telephone displays a copy end position selection picture and displays a guidance such as "end position?" or the like. In the copy end position selection picture, the designated copy range is reversely displayed and the user moves the cursor to a desired position to designate a copy range. Selected character data is temporarily stored as copy data in a storage section such as a work memory, and after this, when a command of paste is input to designate a paste position, the temporarily stored copy data is pasted to the paste position.

Incidentally, as a prior art for simplifying user's input operations in a portable telephone, there is Japanese Patent Application Laid-open No. 2000-115401 "Communication Device" (Applicant: Brother Industries, Ltd., Inventor: Yoko Oike) opened on April 21, 2000.

This prior art is a communication device in which, upon transmitting an e-mail or the like, when a user inputs and determines sentences to be transmitted, a character string that matches certain conditions is extracted from the sentences as a receiver candidate, a destination corresponding to the receiver candidate is searched for from an address book, and the sentences are transmitted by an e-mail using this as the destination, wherein an e-mail can be transmitted without inputting the destination, the operability can be raised, and the convenience of use can be improved.

In the above conventional portable telephone, however, there are problems that, when a copy range is selected or a paste position is designated, key operations for cursor movement are many and the convenience of use is bad.

### SUMMARY OF THE INVENTION

It is an object of the present invention to provide portable telephones in which key operations attendant upon cursor movement and a copy range selection upon performing copy/paste, and the convenience of use can be improved.

The present invention is a portable telephone having a copy function in character input characterized in that, when a specific key is depressed in a state that a picture for selecting a copy start position is displayed, all character data displayed are selected as a copy range, and the selected character data are reversely displayed in a picture for confirming a copy end position. Therefore, when all sentences are desired to be copied, all sentences can be selected as a copy range by one touch without moving the cursor from the head to the tail end of the sentences, key operations can considerably be decreased, and the convenience of use can be improved.

Besides, the present invention is a portable telephone having a copy function in character input, wherein, in a state that a picture for selecting a copy end position is displayed, when an up key is depressed in the case that a cursor is located on the head line of character data, the cursor is moved to the head of the character data and the range of from the head to the cursor position before the movement is selected as a copy range, and when a down key is depressed in the case that the cursor is located on the last line of the character data, the cursor is moved to the tail end of the character data and the range of from the tail end to the cursor position before the movement is selected as a copy range. Therefore, a user can easily move the cursor to a copy end position and select a copy range, key operations can be decreased, and the convenience of use can be improved.

Besides, the present invention is a portable telephone having a copy function in character input, wherein, when a specific key is depressed in a state that a picture for selecting a copy start position is displayed, a series of half-size alphabet or numeral character data starting from a character string registered in advance is selected as a copy range. Therefore, if "HTTP://", "TEL", "Mail to", and so on are registered, character data such as a URL (Uniform Resource Locator), a telephone number, a mail address, or the like, that is frequently copied, can rapidly be selected as a copy range, key operations can be decreased, and the convenience of use can be improved.

Besides, the present invention is a portable telephone having a copy function in character input, wherein, when copy is activated from a submenu in a state that a character input picture is displayed, displayed character data is analyzed to extract a URL, a telephone number, or a mail address and select it as a copy range. Therefore, without performing any special key operation, a URL, a telephone number, or a mail address can selectively be extracted to be a copy range, key operations can be decreased, and the convenience of use can be improved.

Besides, the present invention is a portable telephone wherein, in the above portable telephone, in a state that a series of character data starting from "HTTP://" is selected as a copy range, when a command for pasting said character data is input, it is judged whether or not there is "HTTP://" before said paste position, and when there is "HTTP://", a portion of said character data from which "HTTP://" is removed is pasted to said paste position. Therefore, even if the user does not particularly pay attention, "HTTP://" can be prevented from overlapping upon pasting, and the convenience of use can be improved.

### BRIEF DESCRIPTION OF THE DRAWINGS

FIG. 1 is a construction block diagram of a portable telephone (this device) according to an embodiment of the present invention;
FIG. 2 is an explanatory view showing an all data copy function;
FIG. 3 is an explanatory view showing an example of special cursor movement;
FIG. 4 is an explanatory view showing an example of special copy range selection method;
FIG. 5 is an explanatory view showing an example of numeral copy;
FIG. 6 is an explanatory view showing an example of character string copy;
FIG. 7 is an explanatory view showing another operation of character string copy;
FIG. 8 is an explanatory view showing a next candidate search;
FIG. 9 is a flowchart showing processing of a control section 2 when extracting character data such as a URL, a telephone number, a mail address, or the like, without any special key operation;
FIG. 10 is an explanatory view showing an operation upon pasting; and
FIG. 11 is a flowchart showing processing of the control section 2 when pasting so that "HTTP://" does not overlap.

### <Description of Reference Numerals>

1: talk circuit section, 2: control section, 3: display section, 4: input section, 5: storage section, 6: nonvolatile memory, 41: all data copy key, 42: numeral copy key, 43: character string copy key

### DETAILED DESCRIPTION OF THE PREFERRED EMBODIMENT

An embodiment of the present invention will be described with reference to drawings.

A portable telephone according to the present invention is provided with an all data copy key for selecting all data of displayed sentences as a copy range, in which key operations attendant upon cursor movement when all data is selected as a copy range are made needless and the convenience of use is improved.

Besides, in the portable telephone according to the present invention, when a copy function is activated, half-size alphabet or numeral data starting from a specific character string is automatically selected as a copy range, an e-mail address, a telephone number, a URL, or the like, can be selectively extracted as a copy range, a user may only performs checking the selected copy range and designating a paste position, and key operations attendant upon copy/paste can be decreased to improve the convenience of use.

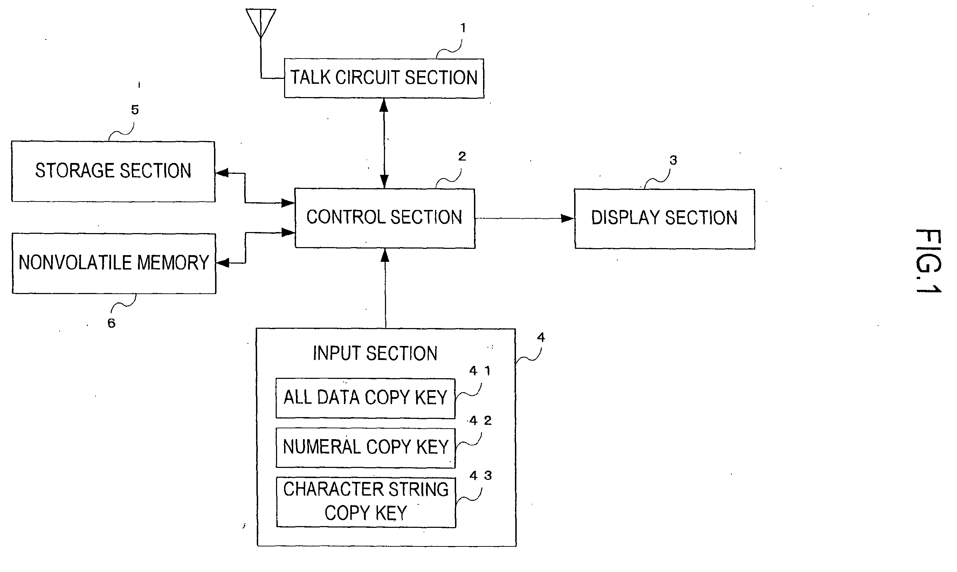

The construction of the portable telephone according to an embodiment of the present invention will be described. FIG. 1 is a construction block diagram of the portable telephone (this device) according to the embodiment of the present invention.

As shown in FIG. 1, the portable telephone (this device) of this embodiment is made up from a talk circuit section 1, a control section 2, a display section 3, a storage section 5, a nonvolatile memory 6, and an input section 4. In the input section 4, other than keys for activating a copy function and a paste function, an all data copy key 41 as a characteristic part of this device, a numeral copy key 42, and a character string copy key 43 are provided. Note that the basic construction of this device is the same as that of the conventional portable telephone but processing of the control section 2 partially differs from the conventional one.

Each component will be described specifically.

The talk circuit section 1 is a circuit provided with general functions necessary for talk or data communication, more specifically, it is provided with audio input/output means, A/D conversion means, D/A conversion means, code/decode means, modulation/demodulation means, and transmission/reception means.

The control section 2 controls the entire device, and as a characteristic feature of this device, it performs processing of making displayed all data copy data when the all data copy key 41 is depressed, processing of performing a special cursor movement when a cursor is at a specific position, and processing of selecting half-size alphabet or numeral character data starting from a preset specific character string as a copy range when the character string copy key is depressed.

The operation of the control section 2 will be described later in detail.

In the input section 4, the all data copy key 41 as a characteristic feature of the present invention, the numeral copy key 42, and the character string copy key 43.

The all data copy key 41 is an input key for activating a function of selecting displayed all character data as a copy range.

The numeral copy key 42 is an input key for activating a function of selecting a character string constituted by a plurality of numerals out of displayed sentences as a copy range.

Besides, the character string copy key 43 is an input key for activating a function of character data starting from a specific character string as a copy range.

Note that, as these keys, exclusive keys may be provided, or each function as described above may be assigned to an existing key or a combination of existing keys.

The storage section 5 is a work memory for the control section 2, and is provided with an area for storing a cursor position, and specific areas for storing character data in a designated copy range as copy data.

Besides, as a characteristic feature of this device, the storage section 5 stores a character string as a retrieval key upon performing character string copy as described later.

Besides, the nonvolatile memory 6 stores, other than processing programs in the control section 2, telephone book data, received mails, and so on.

Next, functions as characteristic features of this device will be described with user's operations and examples of display.

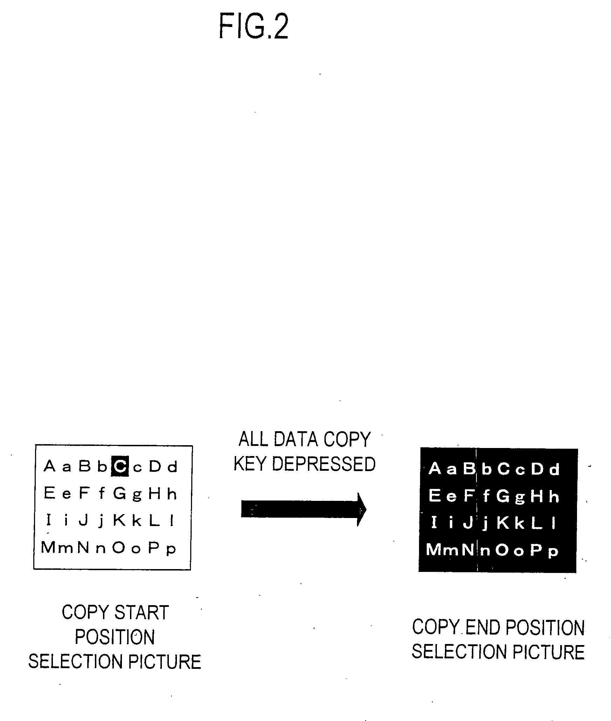

Note that, optional characters are being used for the character data of "AaBb···" in FIG. 2-8,10.

First, all data copy as a characteristic feature of this device will be described with reference to FIG. 2. FIG. 2 is an explanatory view showing the all data copy function.

As shown in FIG. 2, the all data copy function is for selecting displayed all character data as a copy range when the all data copy key 41 is depressed in a state that a copy start position selection picture is displayed.

The operation of this device upon performing all data copy will be described specifically.

As shown in FIG. 2, when a user selects a copy function from a copy key depression or a menu picture, the control section 2 activates the copy function and outputs a copy start position selection picture to the display section 3. Furthermore, when the all data copy key 41 is depressed, the control section 2 holds all character data of currently displayed sentences in the storage section 5 as copy data and displays a copy end position selection picture.

Besides, the control section 2 may hold the copy data in the storage section 5 when displaying the copy end position selection picture, and when the copy start position or end position is changed by cursor movement as described later, it updates the copy data accordingly.

As shown in FIG. 2, in the copy end position selection picture, data selected as a copy range is reversely displayed. After this, when a paste command is input and a paste position is designated, the control section 2 pastes all data stored as the copy data to the paste position.

In this manner, when all sentences are to be copied, since all data can be designated as a copy range by one touch, key operations can be considerably decreased in comparison with a case that the cursor is continuously moved from the head to the tail end of the sentences as conventionally, and the convenience of use can be improved.

Besides, in the example of FIG. 2, the copy range can be confirmed in the copy end position selection picture, and in a state that the copy range is reversely displayed, it is also possible that the user moves the cursor to change the copy start position or copy end position, and thereby a range shorter than all data can also be designated as a copy range. In this device, when operations for cursor movement are performed, the copy data held in the storage section 5 is updated with data in accordance with the cursor position.

Besides, here, after the all data copy key 41 is depressed, the copy end position selection picture is displayed and the copy range is controllable, but it is also possible that the display of the copy end position selection picture is omitted and all data is determined as a copy range immediately by depressing the all data copy key 41. In this manner, the copy of all character data becomes possible by less steps.

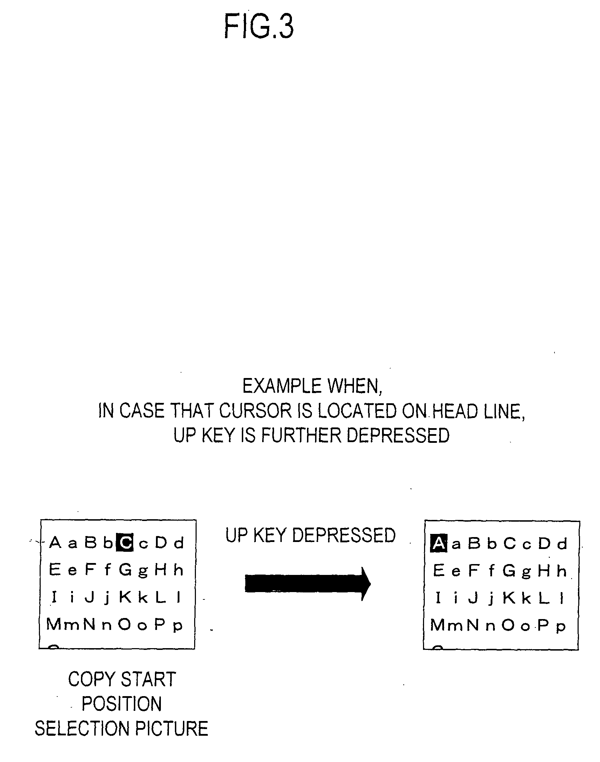

Next, special cursor movement as a characteristic feature of this device will be described with reference to FIG. 3. FIG. 3 is an explanatory view showing an example of special cursor movement.

As shown in FIG. 3, in this device, in a state that a copy start position selection picture is displayed, if an up key ("↑" key) is depressed when the cursor is located on the head line of character data, the cursor is moved to the head of the character data.

Similarly, in this device, in a state that the copy start position selection picture is displayed, if a down key ("↓" key) is depressed when the cursor is located on the last line of the character data, the cursor is moved to the tail end of the character data.

More specifically, if the up key or down key is depressed when the cursor is located on the head line or last line of the character data, the control section 2 moves the cursor as described above, displays it on the display section 3, and stores the cursor position in the storage section 5.

By this, the user can easily move the cursor to the copy start position and key operations can be decreased.

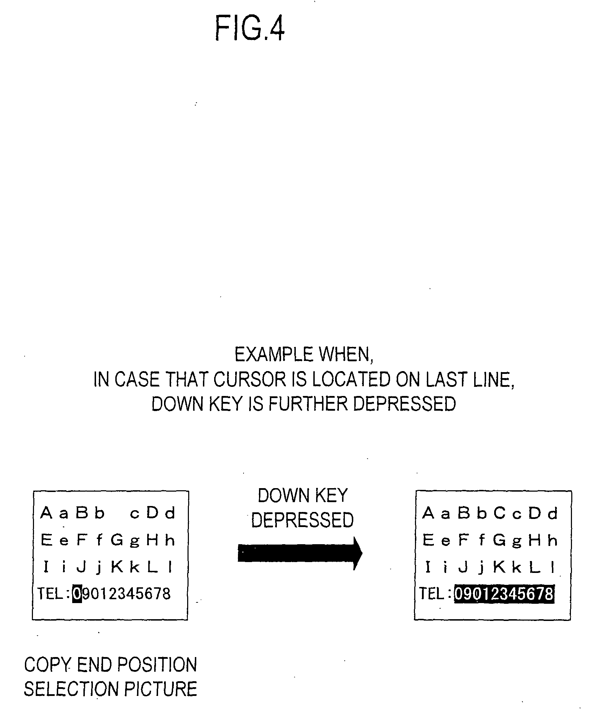

Next, a special copy range selection method as a characteristic feature of this device will be described with reference to FIG. 4. FIG. 4 is an explanatory view showing an example of special copy range selection method.

In this device, in a state that a copy end position selection picture is displayed, if the up key ("↑" key) is depressed when the cursor is located on the head line of character data, the cursor is moved to the head of the character data and the range of from the head to the old cursor position is selected as a copy range.

Besides, as shown in FIG. 4, in this device, in a state that a copy end position selection picture is displayed, if the down key ("↓" key) is depressed when the cursor is located on the last line of the character data, the cursor is moved to the tail end of the character data and the range of from the tail end to the old cursor position is selected as a copy range.

More specifically, if the up key or down key is depressed when the cursor is located on the head line or last line of the character data in the copy end position selection picture, the control section 2 moves the cursor as described above, displays it on the display section 3, selects the range of from the old cursor position to the new cursor position as a copy range, and stores it in the storage section 5.

By this, the user can easily move the cursor to the copy end position to select a copy range and key operations can be decreased.

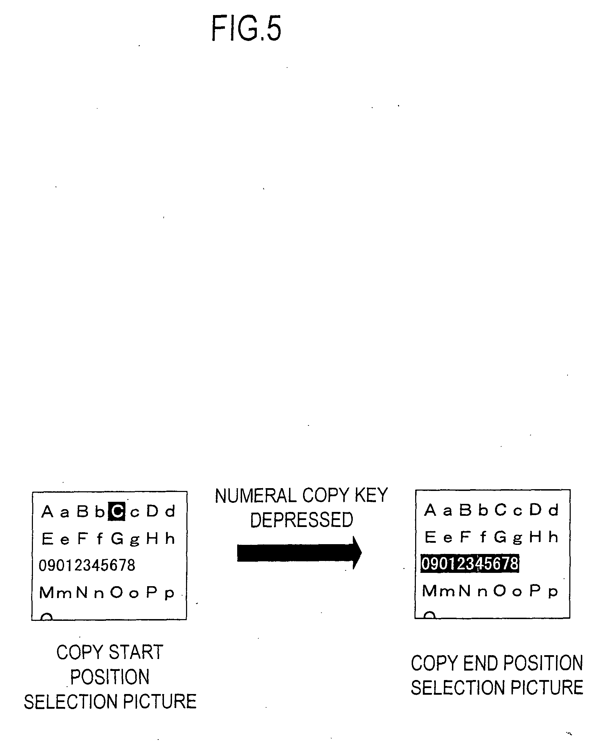

Next, numeral copy as a characteristic feature of this device will be described with reference to FIG. 5. FIG. 5 is an explanatory view showing an example of numeral copy.

As shown in FIG. 5, in this device, in a state that a copy start position selection picture is displayed, if the numeral key 42 is depressed, a character string constituted by a plurality of numerals such as a telephone number out of character data is selected as a copy range, and the selected range is reversely displayed in a copy end position selection picture.

Furthermore, when a paste operation is performed after it is confirmed by the user that the desired telephone number is selected in the copy end position selection picture, the selected data is pasted to the designated position.

More specifically, if the numeral key 42 is depressed, the control section 2 searches for numeral data of a plurality of figures, e.g., 10 figures or 11 figures, from the head of character data, and if hit, reversely displays the numeral data in the copy end position selection picture and stores it in the storage section as copy data.

Besides, the copy range may be changed by cursor movement in displaying the copy end position selection picture, and if the cursor movement is performed, the control section 2 changes the copy data stored in the storage section 5 into data in accordance with the cursor position and stores it.

By this, a telephone number that is frequently selected as a copy target can easily be selected as a copy range, key operations can be decreased, and the convenience of use can be improved.

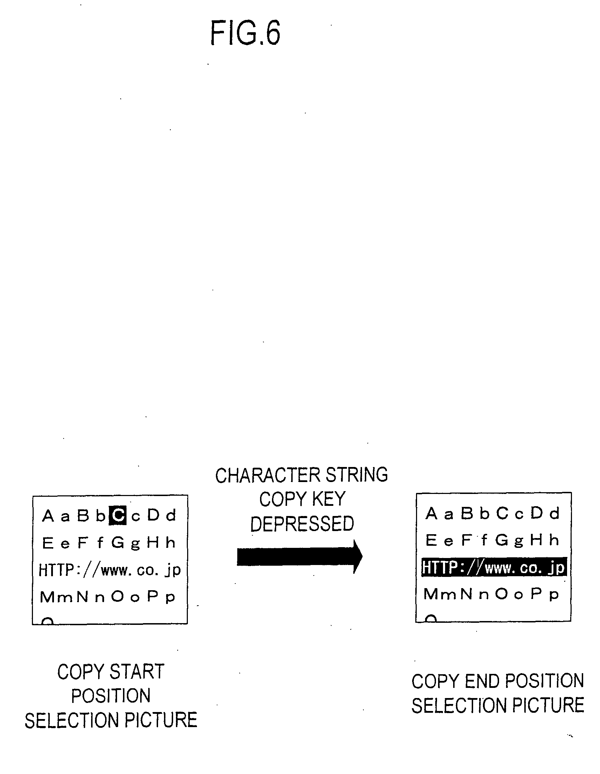

Next, character string copy as a characteristic feature of this device will be described with reference to FIG. 6. FIG. 6 is an explanatory view showing an example of character string copy.

The character string copy is that a copy range is selected by restricting the target to a URL (Uniform Resource Locator), a telephone number, and a mail address that are frequently selected as copy targets.

That is, in this device, in a state that a copy start position selection picture is displayed, if the character string copy key 43 is depressed, character data starting from a specific character string registered in advance such as "http://", "TEL", "Mail to", or the like, is searched for from displayed character data, and the character data is selected as a copy range, and reversely displayed in a copy end position selection picture.

The above function will be described specifically.

First, for performing character string copy, character strings as retrieval keys are registered in advance in the storage section 5. For example, if "http://", "TEL", and "Mail to" are stored as default, retrieval of a URL, telephone number, or mail address starting from these character strings becomes possible. Further, the user can freely add and register character strings.

And, if the copy function is activated and the character string copy key 43 is depressed in a state that a copy start position selection picture is displayed, the control section 2 refers to the storage section 5 and searches for character data starting from a specific character string registered in advance from displayed character data.

Here, a detection method of a character string end position will be described.

In this device, if the control section 2 detects a specific character string, the control section 2 checks characters subsequent to the specific character string one by one, and when data other than a half-size alphabet or numeral character appears, selects the range of from the specific character string before the data as a copy range. Here, the half-size alphabet or numeral characters include *, ., @, and so on.

Besides, as another detection method, if the control section 2 detects a specific character string, it checks characters one by one in the same manner, when a paragraph code or a space appears, the range up to the character data before the paragraph code or space may be selected as a copy range.

In FIG. 6, a case that "HTTP://www.co.jp" is hit by retrieval is shown, but, as described above, by registering "HTTP://", "TEL", "Mail to", and so on in advance, character data such as a URL, a telephone number, a mail address or the like that is frequently copied can be searched for. And, the control section 2 stores the retrieved character string in the storage section 5 as copy data, and reversely displays the character string in a copy end position selection picture.

Besides, the copy rang may be changed by cursor movement in displaying the copy end position selection picture, and if the cursor movement is performed, the control section 2 changes the copy data stored in the storage section 5 into data in accordance with the cursor position and stores it.

By this, in this device, a URL, a telephone number, a mail address, or the like that is frequently copied in the portable telephone can be extracted by one touch to be selected as a copy range, key operations can be decreased, and the convenience of use can be improved.

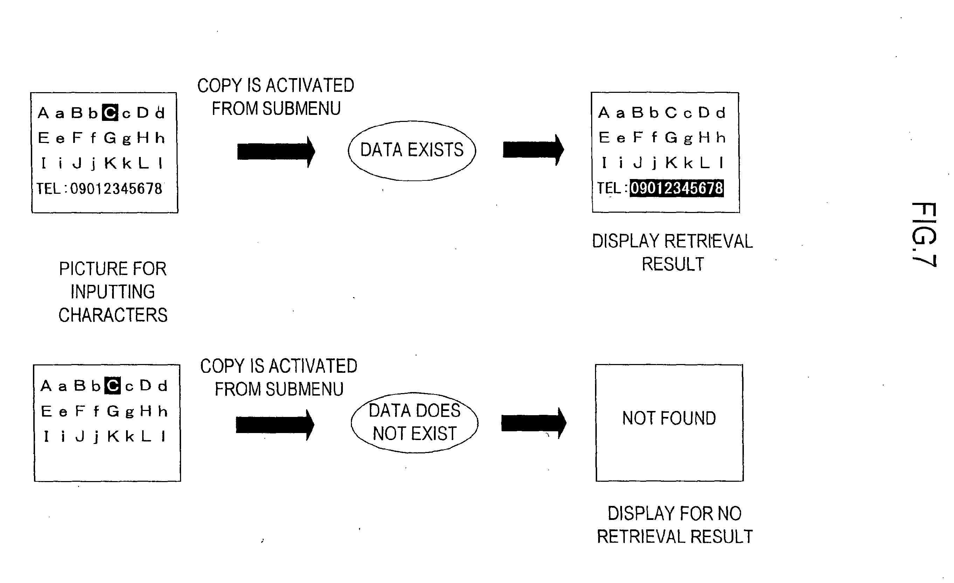

Next, another operation of character string copy in this device will be described with reference to FIG. 7. FIG. 7 is an explanatory view showing another operation of character string copy.

In another operation, when copy is activated from a submenu in a state that a picture to input characters is displayed, without performing a special key operation, displayed character data is analyzed and character data of a URL, a telephone number, or a mail address is extracted to be acquired as copy data.

In the portable telephone, cases of copying a URL, a telephone number, or a mail address are many, and in this device, processing program for analyzing character data and searching for these character data is provided in advance. Processing of the control section 2 will be described later in detail.

As shown in FIG. 7, in a state that a received mail or a mail made by the user is displayed, if copy is activated from a submenu, the control section 2 analyzes character data from the head of the character data to check as to whether or not there is a URL, a telephone number, or a mail address. If exists, the hit retrieval result is displayed as a reverse display.

Besides, if did not hit, that is, if there is no URL, telephone number, or mail address in the character data, a message "not found" is displayed.

By this, the user can easily select a URL, a telephone number, or a mail address that is frequently copied in general, as a copy range by less key operations, and can easily perform copy/paste.

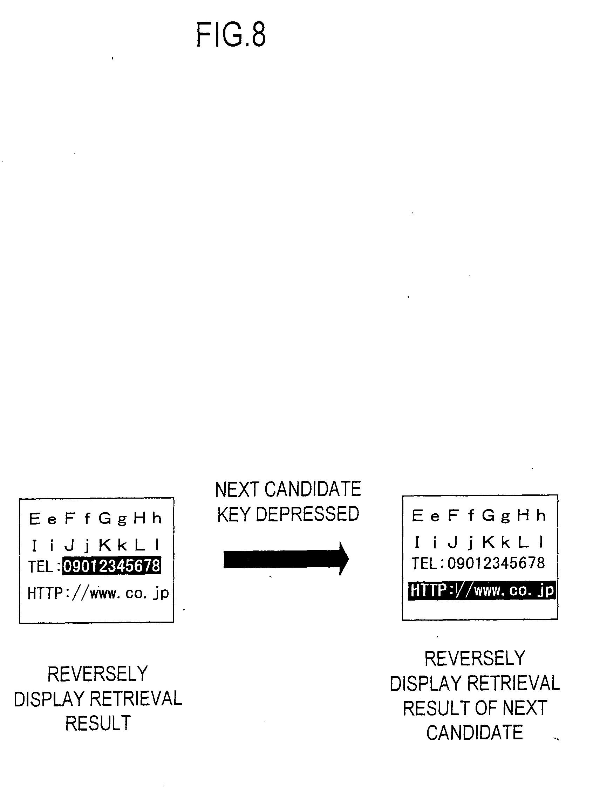

Further, in another operation, in a state that the hit retrieval result is reversely displayed, by depressing "next candidate key", the next candidate is searched for. The next candidate search will be described with reference to FIG. 8. FIG. 8 is an explanatory view showing a next candidate search.

As shown in FIG. 8, if copy is activated from a submenu, in this device, a URL, a telephone number, or a mail address is searched for as described above, and a first searched telephone number "090123454678" is reversely displayed as a retrieval result, but if it is not data that the user desires, the user depresses "next candidate key". If the next candidate key is depressed, this device searches for the next candidate, and when found, the next candidate retrieval result is reversely displayed. If the next candidate is not found, a message "not found" is displayed as shown in FIG. 7.

By this, even in case that there are a plurality of URLs, telephone numbers, or mail addresses, data that the user desires can easily be found and copied.

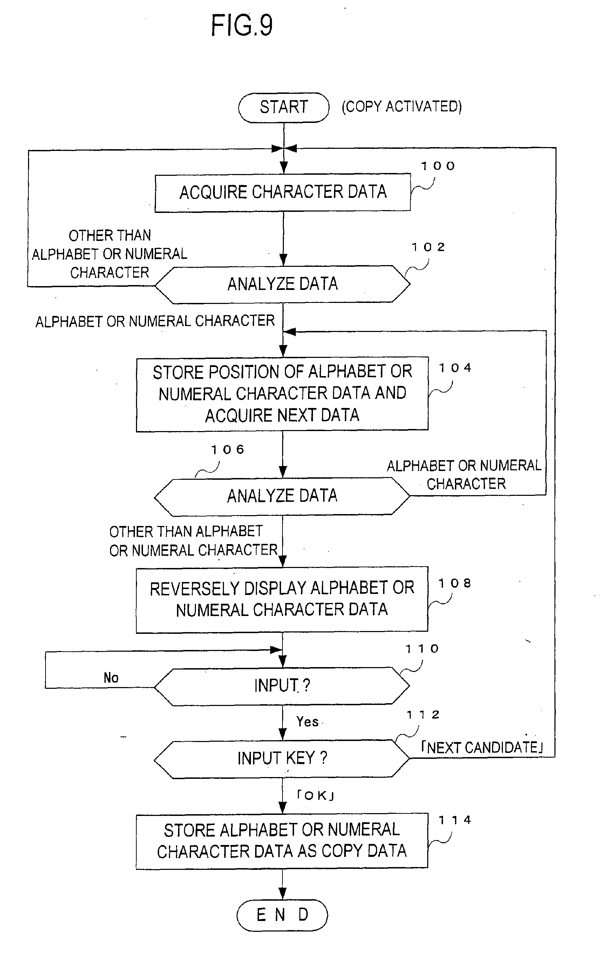

Here, processing of the control section 2 when performing the operations of FIGS. 7 and 8 will be described with reference to FIG. 9. FIG. 9 is a flowchart showing processing of the control section 2 when extracting character data such as a URL, a telephone number, a mail address, or the like, without any special key operation.

As shown in FIG. 9, when copy is activated from a submenu, the control section 2 acquires data from the head of character data (100), and judges as a data analysis whether the acquired character data is an alphabet or numeral character or the other (102).

If the acquired data is the other than an alphabet or numeral character, since it can be considered not to be a URL, a telephone number, a mail address, or the like, the control section 2 returns to processing 100 to acquire the next character data.

Besides, in processing 102, when the character data is an alphabet or numeral character, the control section 2 stores the position of the alphabet or numeral character data, and subsequently acquires the next data (104), and performs data analysis (106).

In processing 106, when the next data is an alphabet or numeral character, the control section 2 repeats processing 106 and processing 108 till it acquires data other than an alphabet or numeral character, and stores the position of the alphabet or numeral character data in the storage section 5.

In processing 106, when the next data is other than an alphabet or numeral character, the control section 2 reversely displays the alphabet or numeral character data on the basis of the alphabet or numeral character data already stored (108).

And, the control section 2 waits for input (110), and judges as to whether the input key is "OK" or "next candidate" (112).

If the input key is the next candidate, the control section 2 interrupts the reverse display, and returns to acquire the next character data.

Besides, if the input key is "OK" in processing 112, the control section 2 stores the alphabet or numeral character data in the range in a specific area of the storage section 5 on the basis of the position of the alphabet or numeral character data already stored (114), and ends processing.

In this manner, processing in the control section 2 is performed.

Besides, here, the analysis of character data is performed on the basis of only whether or not it is alphabet or numeral character data, but, if a URL, a telephone number, or a mail address is desired to be extracted more accurately, extraction conditions may be made severe, for example, such that a half-size alphabet or numeral character string (URL) starting from "HTTP://", a half-size numeral character string (telephone number) of 10 figures or 11 figures, and a half-size alphabet or numeral character string (mail address) including @ and ending by co.jp or .com are extracted.

Further, in this device, if "cancel key" is depressed in activating the above-described copy function, the operation of the copy function is interrupted and the device returns to a mode for inputting characters.

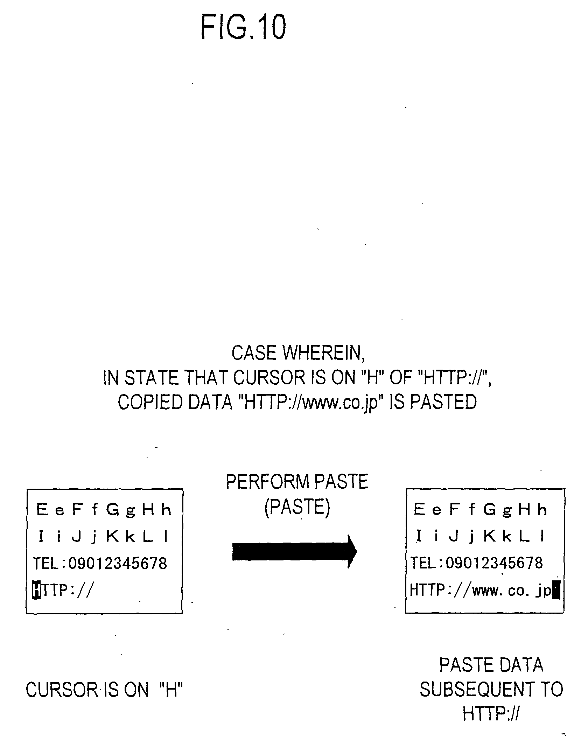

Next, an operation upon pasting as a characteristic feature of this device will be described with reference to FIG. 10. FIG. 10 is an explanatory view showing the operation upon pasting.

As shown in FIG. 10, in this device, in pasting when copy of a URL including data such as "HTTP://", "FTP://", or the like is performed, if there is "HTTP://" or "FTP://" before the pasting destination, pasting is performed with removing data of "HTTP://" or "FTP://" from data stored as copy data.

By this, even if the user does not particularly pay attention, "HTTP://" or "FTP://" can be prevented from overlapping upon pasting, and the convenience of use can be improved.

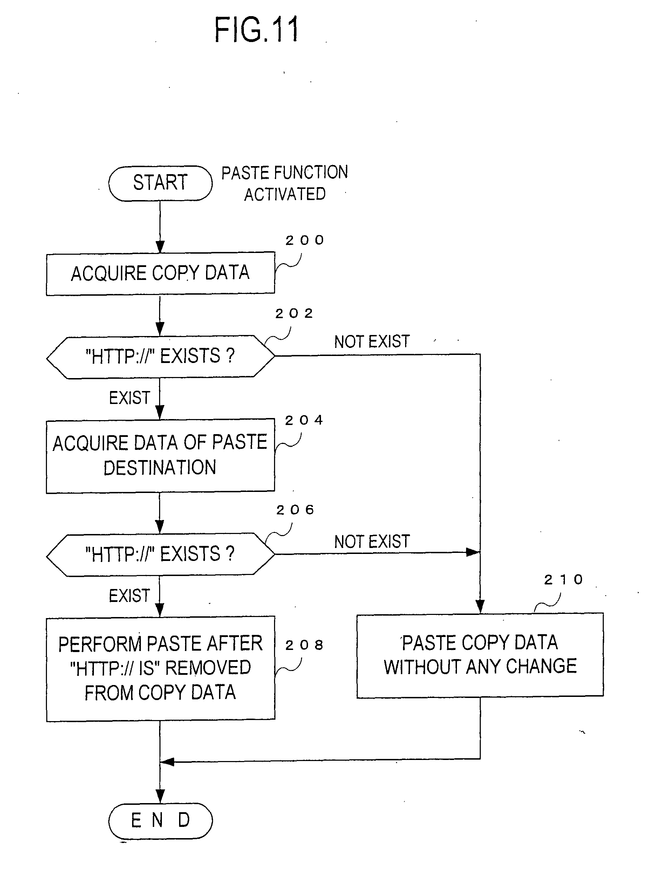

Processing of the control section 2 when the operation of FIG. 10 is performed will be described with reference to FIG. 11. FIG. 11 is a flowchart showing processing of the control section 2 when pasting so that "HTTP://" does not overlap.

As shown in FIG. 11, when a paste function is activated, the control section 2 acquires copy data stored in the storage section 5 (200), and judges as to whether or not there is "HTTP://" in the copy data (202).

When there is "HTTP://" in the copy data, the control section 2 acquires data existing before the position designated as a paste destination (204), and judges as to whether or not there is "HTTP://" before the paste destination (206).

In processing 204, when there is "HTTP://" before the paste destination, the control section 2 performs pasting after removing "HTTP://" from the copy data (208).

Besides, when there is not "HTTP://" in the copy data in processing 202, or when there is not "HTTP://" before the paste destination in processing 206, the copy data acquired in processing 200 is pasted without any change (210).

In this manner, paste processing in which "HTTP://" does not overlap is performed.

According to this device, the all data copy key 41 is provided in the input section 4, and in a state that a copy start position selection picture is displayed, if the all data copy key 41 is depressed, the control section 2 selects the displayed entire sentences as a copy range to acquire all character data as copy data. Therefore, there are effects that, when all sentences are desired to be copied, all sentences can be selected as a copy range by one touch without continuously moving the cursor from the head to the tail end of the sentences, key operations can considerably be decreased, and the convenience of use can be improved.

Besides, according to this device, in a state that a copy start position selection picture is displayed, if the up key is depressed when the cursor is located on the head line of character data, the control section 2 moves the cursor to the head of the character data, besides, if the down key is depressed when the cursor is located on the last line of the character data, the control section 2 moves the cursor to the tail end of the character data. Therefore, there are effects that the user can easily move the cursor to a copy start position, key operations can be made easy, and the convenience of use can be improved.

Besides, according to this device, in a state that a copy end position selection picture is displayed, if the up key is depressed when the cursor is located on the head line of character data, the control section 2 moves the cursor to the head of the character data and selects the range of from the head to the old cursor position as a copy range, besides, if the down key ("↓" key) is depressed when the cursor is located on the last line of the character data, the control section 2 moves the cursor to the tail end of the character data and selects the range of from the tail end to the old cursor position as a copy range. Therefore, there are effects that the user can easily move the cursor to a copy end position and select a copy range, key operations can be decreased, and the convenience of use can be improved.

Further, according to this device, the numeral copy key 42 is provided, and in a state that a copy start position selection picture is displayed, if the numeral key 42 is depressed, the control section 2 selects a character string constituted by a plurality of numerals such as a telephone number or the like out of character data as a copy range, and reversely displays the selected range in a copy end position selection picture. Therefore, there are effects that a telephone number can easily be selected as a copy range, key operations can be decreased, and the convenience of use can be improved.

Still further, according to this device, the character string copy key 43 is provided, and in a state that a copy start position selection picture is displayed, if the character string copy key 43 is depressed, the control section 2 searches for character data starting from a specific character string registered in advance out of displayed character data, selects the character data as a copy range, and reversely displays it in a copy end position selection picture. Therefore, there are effects that, if "HTTP://", "TEL", "Mail to", and so on are registered, character data such as a URL, a telephone number, a mail address, or the like, that is frequently copied, can rapidly be selected as a copy range, key operations can be decreased, and the convenience of use can be improved.

Besides, according to this device, if copy is activated in a state that a picture for inputting characters is displayed, without any special key operation, the control section 2 analyzes displayed character data, extracts character data of a URL, a telephone number, or a mail address, and reversely displays it as a copy range. Therefore, there are effects that a URL, a telephone number, or a mail address can selectively be extracted to be a copy range, key operations can be decreased, and the convenience of use can be improved.

Besides, according to this device, if the next candidate key is depressed in a state that a retrieval result is reversely displayed, the control section 2 searches for another candidate. Therefore, there are effects that, even if there are a plurality of URLs, telephone numbers, or mail addresses, the user can easily select desired data as a copy range, key operations can be decreased, and the convenience of use can be improved.

Further, according to this device, in case of performing copy of a URL including data such as "HTTP://", "FTP://", or the like, and pasting it, if "HTTP://" or "FTP://" exists before the paste destination, the control section 2 pastes it after removing data of "HTTP://" or "FTP://" from data stored as copy data. Therefore, there are effects that, even if the user does not particularly pay attention, "HTTP://" or "FTP://" can be prevented from overlapping upon pasting, and the convenience of use can be improved.

According to the present invention, in a portable telephone having a copy function in character input, when a specific key is depressed in a state that a picture for selecting a copy start position is displayed, all character data displayed are selected as a copy range, and the selected character data are reversely displayed in a picture for confirming a copy end position. Therefore, there are effects that, when all sentences are desired to be copied, all sentences can be selected as a copy range by one touch without moving the cursor from the head to the tail end of the sentences, key operations can considerably be decreased, and the convenience of use can be improved.

Besides, according to the present invention, in a portable telephone, in a state that a picture for selecting a copy end position is displayed, when an up key is depressed in the case that a cursor is located on the head line of character data, the cursor is moved to the head of the character data and the range of from the head to the cursor position before the movement is selected as a copy range, and when a down key is depressed in the case that the cursor is located on the last line of the character data, the cursor is moved to the tail end of the character data and the range of from the tail end to the cursor position before the movement is selected as a copy range. Therefore, there are effects that a user can easily move the cursor to a copy end position and select a copy range, key operations can be decreased, and the convenience of use can be improved.

Besides, according to the present invention, in a portable telephone, when a specific key is depressed in a state that a picture for selecting a copy start position is displayed, a series of half-size alphabet or numeral character data starting from a character string registered in advance is selected as a copy range. Therefore, there are effects that, if "HTTP://", "TEL", "Mail to", and so on are registered, character data such as a URL, a telephone number, a mail address, or the like, that is frequently copied, can rapidly be selected as a copy range, key operations can be decreased, and the convenience of use can be improved.

Besides, according to the present invention, in a portable telephone, when copy is activated from a submenu in a state that a character input picture is displayed, displayed character data is analyzed to extract a URL, a telephone number, or a mail address and select it as a copy range. Therefore, there are effects that, even if the user does not perform any special key operation, a URL, a telephone number, or a mail address can selectively be extracted to be a copy range, key operations can be decreased, and the convenience of use can be improved.

Besides, according to the present invention, in a portable telephone, in a state that a series of character data starting from "HTTP://" is selected as a copy range, when a command for pasting said character data is input, it is judged whether or not there is "HTTP://" before said paste position, and when there is "HTTP://", a portion of said character data from which "HTTP://" is removed is pasted to said paste position. Therefore, there are effects that, even if the user does not particularly pay attention, "HTTP://" can be prevented from overlapping upon pasting, and the convenience of use can be improved.

## Claims

1. A method for operating a portable telephone having a copy function in character input, wherein:
when a specific key is depressed in a state that a picture for selecting a copy start position is displayed, all character data displayed are selected as a copy range, and said selected character data are reversely displayed in a picture for confirming a copy end position.

2. A method for operating a portable telephone having a copy function in character input, wherein:
in a state that a picture for selecting a copy end position is displayed, when an up key is depressed in the case that a cursor is located on the head line of character data, the cursor is moved to the head of the character data and the range of from said head to the cursor position before said movement is selected as a copy range, and when a down key is depressed in the case that the cursor is located on the last line of the character data, the cursor is moved to the tail end of the character data and the range of from said tail end to the cursor position before said movement is selected as a copy range.

3. A method for operating a portable telephone having a copy function in character input, wherein:
when a specific key is depressed in a state that a picture for selecting a copy start position is displayed, a series of half-size alphabet or numeral character data starting from a character string registered in advance is selected as a copy range.

4. A method for operating a portable telephone having a copy function in character input, wherein:
when copy is activated from a submenu in a state that a character input picture is displayed, displayed character data is analyzed to extract a URL, a telephone number, or a mail address and select it as a copy range.

5. A method for operating a portable telephone according to claim 3 or 4, wherein:
in a state that a series of character data starting from "HTTP://" is selected as a copy range, when a command for pasting said character data is input, it is judged whether or not there is "HTTP://" before said paste position, and when there is "HTTP://", a portion of said character data from which "HTTP://" is removed is pasted to said paste position.

6. A portable telephone comprising:
an input section (4) for inputting data;
a control section (2) for performing copy of a character string following data input from said input section (4); and
a display section (3) for displaying data following instructions from said control section (2),
wherein said control section (2) is a control section that, in a state that a picture for selecting a copy start position is displayed in said display section (3), when a specific key (41) of said input section (4) is depressed, selects all character data displayed as a copy range, and outputs instructions to said display section (3) to reversely display said selected character data, and
said display section (3) is a display section that reversely displays the selected character data following the instructions from said control section (2).

7. A portable telephone comprising:
an input section (4) for inputting data;
a control section (2) for performing copy of a character string following data input from said input section (4); and
a display section (3) for displaying data following instructions from said control section (2),
wherein said control section (2) is a control section that, in a state that a picture for selecting a copy end position is displayed in said display section (3), when an up key of said input section (4) is depressed when a cursor is located on the head line of character data, moves the cursor to the head of the character data and selects the range of from said head to the cursor position before said movement as a copy range, and when a down key is depressed in the case that the cursor is located on the last line of the character data, moves the cursor to the tail end of the character data and selects the range of from said tail end to the cursor position before said movement as a copy range, and outputs instructions to said display section (3) to reversely display the character data selected as said copy range, and
said display section (3) is a display section that reversely displays the selected character data following the instructions from said control section (2).

8. A portable telephone comprising:
an input section (4) for inputting data;
a control section (2) for performing copy of a character string following data input from said input section (4); and
a display section (3) for displaying data following instructions from said control section (2),
wherein said control section (2) is a control section that, in a state that a picture for selecting a copy start position is displayed in said display section (3), when a specific key (42, 43) of said input section (4) is depressed, selects a series of half-size alphabet or numeral character data starting from a character string registered in advance as a copy range, and outputs instructions to said display section (3) to reversely display said selected character data, and
said display section (3) is a display section that reversely displays the selected character data following the instructions from said control section (2).

9. A portable telephone comprising:
an input section (4) for inputting data;
a control section (2) for performing copy of a character string following data input from said input section (4); and
a display section (3) for displaying data following instructions from said control section (2),
wherein said control section (2) is a control section that, in a state that a picture for selecting a copy start position is displayed in said display section (3), when copy is activated from a submenu, analyzes displayed character data to extract a URL, a telephone number, or a mail address, selects it as a copy range, and outputs instructions to said display section (3) to reversely display said selected URL, telephone number, or mail address, and
said display section (3) is a display section that reversely displays the selected URL, telephone number, or mail address following the instructions from said control section (2).

10. The portable telephone according to claim 8 or 9, wherein said control section (2) is a control section that, in a state that a series of character data starting from "HTTP://" is selected as a copy range, when a command for pasting said character data is input from the input section (4), judges as to whether or not there is "HTTP://" before said paste position, and when there is "HTTP://", pastes a portion of said character data from which "HTTP://" is removed to said paste position.
